(19) Europäisches Patentamt
European Patent Office
Office européen des brevets

(11) Veröffentlichungsnummer: **0 416 434 B1**

(12) **EUROPÄISCHE PATENTSCHRIFT**

(45) Veröffentlichungstag der Patentschrift: **25.05.94**

(51) Int. Cl.$^5$: **C09B 55/00**, C09B 23/04, B41M 5/38

(21) Anmeldenummer: **90116436.8**

(22) Anmeldetag: **28.08.90**

(54) **Triazolpyridinfarbstoffe sowie ein Verfahren zum thermischen Transfer von Methinfarbstoffen.**

(30) Priorität: **07.09.89 DE 3929698**

(43) Veröffentlichungstag der Anmeldung:
**13.03.91 Patentblatt 91/11**

(45) Bekanntmachung des Hinweises auf die Patenterteilung:
**25.05.94 Patentblatt 94/21**

(84) Benannte Vertragsstaaten:
**CH DE FR GB IT LI**

(56) Entgegenhaltungen:
**DE-A- 3 829 918**
**FR-A- 2 426 717**
**GB-A- 1 253 933**

(73) Patentinhaber: **BASF Aktiengesellschaft**
**Carl-Bosch-Strasse 38**
**D-67063 Ludwigshafen(DE)**

(72) Erfinder: **Sens, Ruediger, Dr.**
**Medicusstrasse 12**
**D-6800 Mannheim 1(DE)**
Erfinder: **Schefczik, Ernst, Dr.**
**Dubliner Strasse 7**
**D-6700 Ludwigshafen(DE)**
Erfinder: **Etzbach, Karl-Heinz, Dr.**
**carl-Bosch-Ring 55**
**D-6710 Frankenthal(DE)**
Erfinder: **Lamm, Gunther, Dr.**
**Heinrich-Heine-Strasse 7**
**D-6733 Hassloch(DE)**
Erfinder: **Reichelt, Helmut, Dr.**
**Johann-Gottlieb-Strasse 7**
**D-6730 Neustadt(DE)**
Erfinder: **Wiesenfeldt, Matthias, Dr.**
**Rosenstrasse 10**
**D-6704 Mutterstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 416 434 B1

## Beschreibung

Die vorliegende Erfindung betrifft neue Triazolopyridinfarbstoffe der Formel I

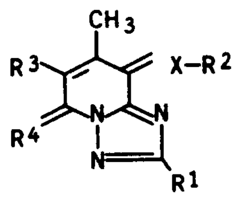

(I),

in der

- $R^1$ $C_1$-$C_{20}$-Alkyl, das gegebenenfalls substituiert ist und durch ein oder mehrere Sauerstoffatome unterbrochen sein kann, gegebenenfalls substituiertes Phenyl oder Hydroxy,
- $R^2$ einen 5- oder 6-gliedrigen carbocyclischen oder heterocyclischen Rest, der gegebenenfalls substituiert ist und benzoanelliert sein kann,
- $R^3$ Cyano, Carbamoyl, Carboxyl oder $C_1$-$C_4$-Alkoxycarbonyl,
- $R^4$ Sauerstoff oder einen Rest der Formel

$C(CN)_2$ , 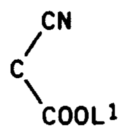

oder $C(COOL^1)_2$ ,
wobei $L^1$ jeweils für $C_1$-$C_8$-Alkyl, das gegebenenfalls durch 1 oder 2 Sauerstoffatome unterbrochen ist, steht, und
- X CH oder Stickstoff bedeuten

sowie ein Verfahren zum thermischen Transfer von Methinfarbstoffen.

Aus der US-A-4 769 360 sind Benzochinoniminfarbstoffe bekannt, die sich von p-Phenylendiaminderivaten ableiten und die im Thermotransferdruck zur Anwendung kommen sollen. Es hat sich jedoch gezeigt, daß diese Farbstoffe über ungenügende coloristische Eigenschaften verfügen.

Aufgabe der vorliegenden Erfindung war es deshalb, neue Farbstoffe bereitzustellen, die sich in vorteilhafter Weise für den thermischen Transfer eignen.

Demgemäß wurden die eingangs näher bezeichneten Triazolopyridinfarbstoffe der Formel I gefunden.

Die Farbstoffe der Formel I können in mehreren tautomeren Formen auftreten, die alle vom Patentanspruch umfaßt werden. Beispielsweise können die Verbindungen mit $R^4$ = Sauerstoff u.a. in folgenden tautomeren Formen auftreten:

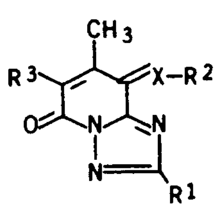

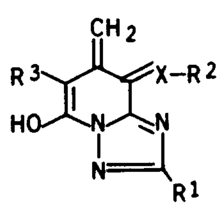

Wenn $R^1$ in Formel I einen substituierten $C_1$-$C_{20}$-Alkylrest bedeutet, so können als Substituenten z.B. Phenyl, $C_1$-$C_4$-Alkylphenyl, $C_1$-$C_4$-Alkoxyphenyl, Halogenphenyl, $C_1$-$C_8$-Alkanoyloxy, $C_1$-$C_{20}$-Alkoxycarbonyl, $C_1$-$C_{20}$-Alkoxycarbonyloxy, wobei die Alkylkette der beiden letztgenannten Reste gegebenenfalls durch 1 bis 4 Sauerstoffatome unterbrochen und/oder durch Phenyl oder Phenoxy substituiert ist, Halogen, Hydroxy oder Cyano in Betracht kommen.

Wenn $R^1$ in Formel I einen Alkylrest darstellt, der durch Sauerstoffatome unterbrochen ist, so sind solche Alkylreste bevorzugt, die durch 1 bis 4 Sauerstoffatome, insbesondere 1 bis 2 Sauerstoffatome, unterbrochen sind.

Wenn $R^1$ in Formel I einen substituierten Phenylrest bedeutet, so können als Substituenten z.B. $C_1$-$C_8$-Alkyl, $C_1$-$C_8$-Alkoxy, Halogen, dabei insbesondere Chlor oder Brom, oder Carboxyl in Betracht kommen.

Reste $R^2$ können sich z.B. von Komponenten aus der Benzol-, Indol-, Chinolin-, Aminonaphthalin-,Pyrrol-, Aminothiazol-, Benzimidazol-, Benzthiazol-, Aminothiophen- oder Diaminopyridinreihe ableiten.

Wichtige Reste $R^2$ sind z.B. solche der Formeln IIa bis IIu

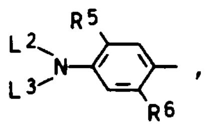
(IIa)

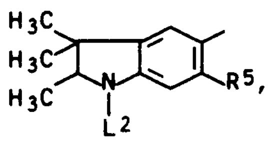
(IIb)

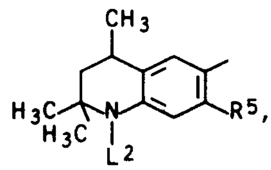
(IIc)

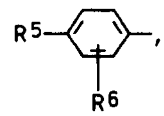
(IId)

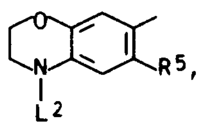
(IIe)

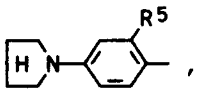
(IIf)

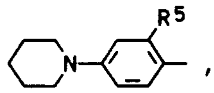
(IIg)

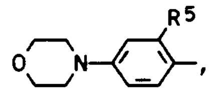
(IIh)

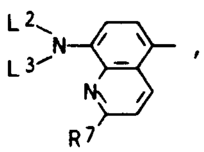
(IIi)

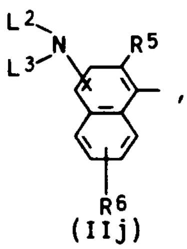
(IIj)

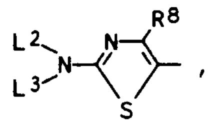
(IIk)

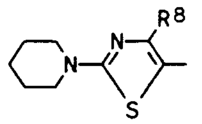
(IIl)

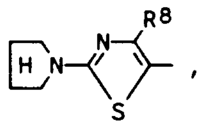
(IIm)

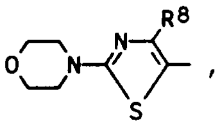
(IIn)

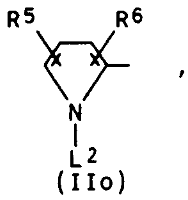
(IIo)

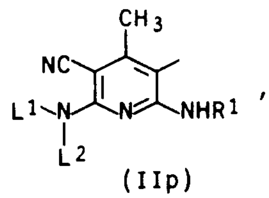
(IIp)

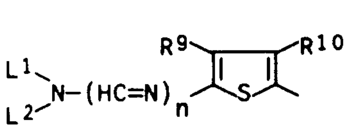
(IIr)

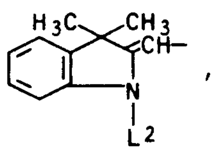
(IIq)

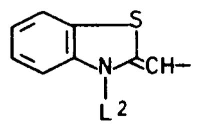
(IIs)

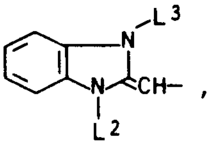
(IIt)

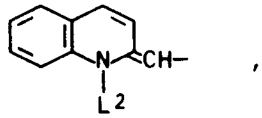
(IIu)

worin

| | |
|---|---|
| n | 0 oder 1, |
| $L^2$ und $L^3$ | gleich oder verschieden sind und unabhängig voneinander jeweils Wasserstoff oder den |

obengenannten Rest $R^1$,

$R^5$ und $R^6$ gleich oder verschieden sind und unabhängig voneinander jeweils Wasserstoff, Hydroxy, gegebenenfalls durch Phenyl oder $C_1$-$C_4$-Alkylphenyl substituiertes $C_1$-$C_8$-Alkyl, gegebenenfalls durch Phenyl oder $C_1$-$C_4$-Alkylphenyl substituiertes $C_1$-$C_8$-Alkoxy, $C_1$-$C_8$-Alkanoylamino, $C_1$-$C_8$-Alkylsulfonylamino oder $C_1$-$C_8$-Mono- oder Dialkylaminosulfonylamino,

$R^7$ Wasserstoff oder Methyl,

$R^8$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl, Hydroxy oder $C_1$-$C_8$-Monoalkylamino,

$R^9$ Cyano, Carbamoyl, $C_1$-$C_8$-Mono- oder Dialkylcarbamoyl oder $C_1$-$C_8$-Alkoxycarbonyl und

$R^{10}$ Halogen, Wasserstoff, $C_1$-$C_4$-Alkyl, $C_1$-$C_4$-Alkoxy, $C_1$-$C_4$-Alkylthio oder gegebenenfalls durch $C_1$-$C_4$-Alkyl substituiertes Phenyl bedeuten.

Alle in den obengenannten Formeln auftretenden Alkylreste können sowohl geradkettig als auch verzweigt sein.

Geeignete Reste $R^1$, $R^5$, $R^6$, $R^8$, $R^{10}$, $L^1$ und $L^2$ sind z.B. Methyl, Ethyl, Propyl, Isopropyl, Butyl, Isobutyl, sec-Butyl oder tert-Butyl.

Reste $R^1$, $R^5$, $R^6$, $R^8$, $L^1$ und $L^2$ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste $R^1$ sind weiterhin z.B. Nonyl, Isononyl, Decyl, Isodecyl, Undecyl, Dodecyl, Tridecyl, Isotridecyl, Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.).

Reste $R^1$, $L^1$ und $L^2$ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste $R^1$ sind weiterhin z.B. 3,6,9-Trioxadecyl, 3,6,9-Trioxaundecyl, 3,6,9,12-Tetraoxatridecyl, 3,6,9,12-Tetraoxatetradecyl, 2-Carboxyethyl, 2-Methoxycarbonylethyl, Benzyl, 1- oder 2-Phenylethyl, 3-Benzyloxypropyl, Phenoxymethyl, 6-Phenoxy-4-oxahexyl, 8-Phenoxy-4-oxaoctyl, 2-, 3- oder 4-Chlorphenyl oder 2-, 3- oder 4-Carboxylphenyl.

Reste $R^3$ und $R^9$ sind z.B. Methoxycarbonyl, Ethoxycarbonyl, Propoxycarbonyl, Isopropoxycarbonyl, Butoxycarbonyl, Isobutoxycarbonyl, Isobutoxycarbonyl oder sec-Butoxycarbonyl.

Reste $R^9$ sind weiterhin z.B. Mono- oder Dimethylcarbamoyl, Mono- oder Diethylcarbonyl, Mono- oder Dipropylcarbamoyl, Mono- oder Diisopropylcarbonyl, Mono- oder Dibutylcarbamoyl oder N-Methy-N-butylcarbamoyl.

Reste $R^5$, $R^6$ und $R^{10}$ sind weiterhin z.B. Methoxy, Ethoxy, Propoxy, Isopropoxy, Butoxy, Isobutoxy oder sec-Butoxy.

Reste $R^{10}$ sind weiterhin z.B. Methylthio, Ethylthio, Propylthio, Isopropylthio, Butylthio, Isobutylthio oder sec-Butylthio.

$R^1$, $R^8$ und $R^{10}$ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl oder 2,4-Dimethylphenyl.

Reste $R^1$ und $R^8$ sind weiterhin z.B. 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste $R^1$, sind weiterhin z.B. 2-Cyanoethyl, 4-Cyanobutyl, 2-Hydroxyethyl, 5-Hydroxynonyl, oder ein Rest der Formel

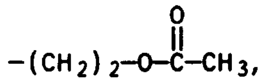, 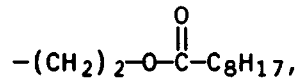,

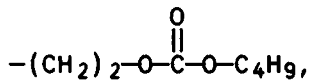, $-(CH_2)_{10}-O-(CH_2)_4CH_3$, 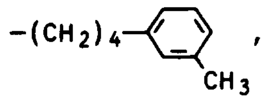,

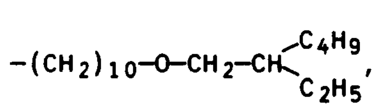, $-(CH_2)_4-O-C_4H_9$, 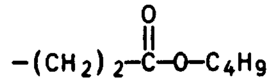,

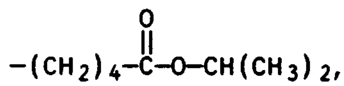, 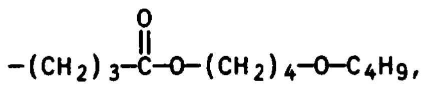,

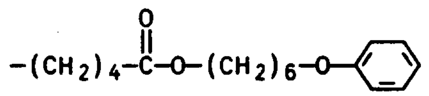, 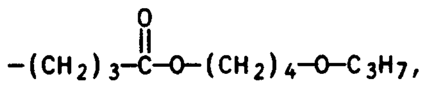,

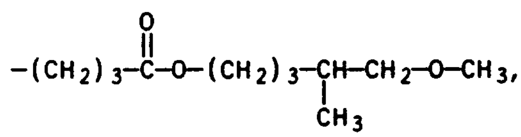, 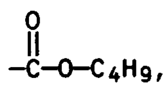, 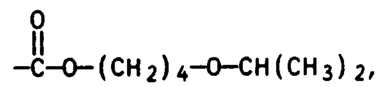,

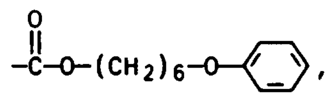,

$-(CH_2)_3-O-(CH_2)_6-O-C_4H_9$, $(C_2H_4O)_3C_2H_5$, $(C_2H_4O)_3C_3H_7$ oder

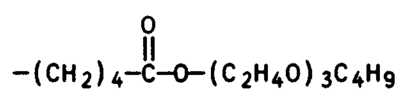 .

Bevorzugt sind Triazolopyridinfarbstoffe der Formel I, in der $R^3$ Cyano bedeutet.

Weiterhin bevorzugt sind Triazolopyridinfarbstoffe der Formel I, in der $R^2$ sich von einer Komponente aus der Benzol-, Indol-, Chinolin-, Aminonaphthalin-, Pyrrol-, Aminothiazol-, Benzimidazol-, Benzthiazol-, Aminothiophen- oder Diaminopyridinreihe ableitet.

Weiterhin bevorzugt sind Triazolopyridinfarbstoffe der Formel I, in der $R^1$ $C_1$-$C_{12}$-Alkyl, des gegebenenfalls durch $C_1$-$C_6$-Alkanoyloxy, $C_1$-$C_8$-Alkoxycarbonyl, deren Alkylkette jeweils durch 1 oder 2 Sauerstoffatome unterbrochen sein kann, Phenyl oder $C_1$-$C_4$-Alkylphenyl, substituiert ist und durch 1 oder 2 Sauerstoffatome unterbrochen sein kann, bedeutet.

Insbesondere bevorzugt sind Triazolopyridinfarbstoffe der Formel I, in der $R^1$ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin insbesondere bevorzugt sind Triazolopyridinfarbstoffe der Formel I, in der $R^2$ einen Rest der obengenannten Formel IIa, IIc, IIk, II l, IIm oder IIn bedeutet, wobei

$L^2$ und $L^3$ unabhängig voneinander für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder gegebenenfalls durch Methyl substituiertes

Phenyl,

$R^5$ und $R^6$ unabhängig voneinander für Wasserstoff, $C_1$-$C_4$-Alkyl, $C_1$-$C_4$-Alkoxy oder $C_1$-$C_8$-Alkanoylamino und

$R^8$ für Wasserstoff, $C_1$-$C_4$-Alkyl, gegebenenfalls durch $C_1$-$C_4$-Alkyl oder $C_1$-$C_4$-Alkoxy substituiertes Phenyl, Benzyl oder Thienyl stehen.

Die erfindungsgemäßen Farbstoffe der Formel I können nach an sich bekannten Methoden hergestellt werden.

Beispielsweise können diejenigen Triazolopyridinfarbstoffe der Formel I, in der X CH bedeutet, durch Kondensation von Aldehyden der Formel III

$R^2$-CHO (III),

in der $R^2$ die obengenannte Bedeutung besitzt mit Triazolopyridinen der Formel IV

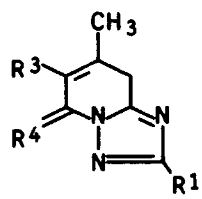

(IV),

in der $R^1$, $R^3$ und $R^4$ jeweils die obengenannte Bedeutung besitzen, erhalten werden.

Diejenigen Triazolopyridinfarbstoffe der Formel I, in der X Stickstoff bedeutet, können z.B. durch Kodensation der Nitrosoverbindungen der Formel V

$R^2$-NO (V) ,

in der $R^2$ die obengenannte Bedeutung besitzt, oder durch oxidative Kupplung der Aminoverbindungen der Formel VI

$R^2$-NH2 (VI),

in der $R^2$ die obengenannte Bedeutung besitzt, mit den Triazolopyridinen IV erhalten werden.

Bei den Triazolopyridinen der Formel IV handelt es sich ebenfalls um an sich bekannte Verbindungen. Ihre Herstellung ist z.B. in der älteren deutschen Patentanmeldung P 39 26 770.9 beschrieben.

Eine weitere Aufgabe der vorliegenden Erfindung bestand darin, ein verfahren zum thermischen Transfer von Farbstoffen bereitzustellen, wobei die zur Anwendung kommenden Farbstoffe möglichst frei sein sollten von anwendungstechnischen Mängeln.

Beim Thermotransferdruckverfahren wird ein Transferblatt, welches einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf, mit kurzen Heizimpulsen (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zur übertragenden Farbstoffmenge (und damit die Farbabstufung) durch Einstellung der an den Heizkopf abzugebenden Energie leicht möglich ist.

Allgemein wird die Farbaufzeichnung unter Verwendung der drei subtraktiven Grundfarben Gelb, Magenta und Cyan (und gegebenenfalls Schwarz) durchgeführt. Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren,

- technisch leicht zugänglich sein.

Diese Forderungen sind gleichzeitig sehr schwierig zu erfüllen, wie die Erfahrung lehrt.

Daher entsprechen die meisten der bekannten, für den thermischen Transferdruck verwendeten Farbstoffe nicht dem geforderten Anforderungsprofil.

Es wurde nun gefunden, daß die übertragung von Methinfarbstoffen von einem Träger auf ein mit Kunststoff beschichtetes Papier durch Diffusion mit Hilfe einer Energiequelle vorteilhaft gelingt, wenn man einen Träger verwendet, auf dem sich ein oder mehrere Farbstoffe der Formel I und/oder Ia

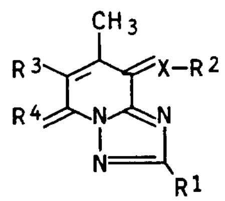

(I)

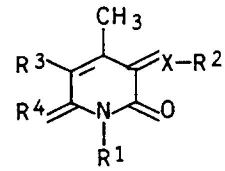

(Ia)

befinden, wobei

R¹ $C_1$-$C_{20}$-Alkyl, das gegebenenfalls substituiert ist und durch ein oder mehrere Sauerstoffatome unterbrochen sein kann, gegebenenfalls substituiertes Phenyl oder Hydroxy,

$R^2$ einen 5- oder 6-gliedrigen carbocyclischen oder heterocyclischen Rest, der gegebenenfalls substituiert ist und benzoanelliert sein kann,

$R^3$ Cyano, Carbamoyl, Carboxyl oder $C_1$-C4-Alkoxycarbonyl,

$R^4$ Sauerstoff oder einen Rest der Formel

$C(CN)_2$ ,

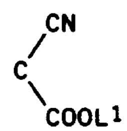

oder $C(COOL^1)_2$ ,

wobei $L^1$ jeweils für $C_1$-$C_8$-Alkyl, das gegebenenfalls durch 1 oder 2 Sauerstoffatome unterbrochen ist, steht, und

X CH oder Stickstoff bedeuten.

Als Energiequelle, mittels der die Farbstoffe der Formel I und/oder Ia durch Diffusion übertragen werden, kommt z.B. ein Thermokopf oder ein Laser in Betracht. Die Anwendung eines Thermokopfes ist bevorzugt.

Bevorzugt ist das Verfahren, wenn man Farbstoffe der Formel I überträgt.

Weiterhin bevorzugt ist das Verfahren, wenn man Triazolopyridinfarbstoffe der Formel I überträgt, in der $R^3$ Cyano bedeutet.

Weiterhin bevorzugt ist das Verfahren, wenn man Triazolopyridinfarbstoffe der Formel I überträgt, in der $R^2$ sich von einer Komponente aus der Benzol-, Indol-, Chinolin-, Aminonaphthalin-, Pyrrol-, Aminothiazol-, Benzimidazol-, Benzthiazol-, Aminothiophen- oder Diaminopyridinreihe ableitet.

Weiterhin bevorzugt ist das Verfahren, wenn man Triazolopyridinfarbstoffe der Formel I überträgt, in der $R^1$ $C_1$-$C_{12}$-Alkyl, das gegebenenfalls durch $C_1$-$C_6$-Alkanoyloxy, $C_1$-$C_8$-Alkoxycarbonyl, deren Alkylkette jeweils durch 1 oder 2 Sauerstoffatome unterbrochen sein kann, Phenyl oder $C_1$-$C_4$-Alkylphenyl substituiert ist und durch 1 oder 2 Sauerstoffatome unterbrochen sein kann, bedeutet.

Insbesondere bevorzugt ist das Verfahren, wenn man Triazolopyridinfarbstoffe der Formel I überträgt, in der $R^1$ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin insbesondere bevorzugt ist das Verfahren, wenn man Triazolopyridinfarbstoffe der Formel I überträgt, in der $R^2$ einen Rest der obengenannten Formel IIa, IIc, IIk, II I, IIm oder IIn bedeutet, wobei

$L^2$ und $L^3$ unabhängig voneinander für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder gegebenenfalls durch Methyl substituiertes

Phenyl,

$R^5$ und $R^6$ unabhängig voneinander für Wasserstoff, $C_1$-$C_4$-Alkyl, $C_1$-$C_4$-Alkoxy oder $C_1$-$C_8$-Alkanoylamino und

$R^8$ für Wasserstoff, $C_1$-$C_4$-Alkyl, gegebenenfalls durch $C_1$-$C_4$-Alkyl oder $C_1$-$C_4$-Alkoxy substituiertes Phenyl, Benzyl oder Thienyl stehen.

Zur Herstellung der für das Verfahren benötigten Farbstoffträger werden die Farbstoffe in einem geeigneten organischen Lösungsmittel, z. B. Chlorbenzol, Isobutanol, Methylethylketon, Methylenchlorid, Toluol, Tetrahydrofuran oder deren Mischungen, mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe wird mittels einer Rakel auf den inerten Träger aufgetragen und die Färbung an der Luft getrocknet. Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z. B. Methylcellulose, Ethylcellulose, Ethylhydroxyethylcellulose, Hydroxypropylcellulose, Celluloseacetat oder Celluloseacetobutyrat, Stärke, Alginate, Alkylresins, Vinylresins, Polyvinylalkohol, Polyvinylacetat, Polyvinylbutyrat oder Polyvinylpyrrolidone. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind in der DE-A-3 524 519 beschrieben.

Bevorzugte Bindemittel sind Ethylcellulose, Ethylhydroxyethylcellulose, Polyvinylbutyrat oder Polyvinylacetat.

Das Verhältnis Bindemittel : Farbstoff variiert vorzugsweise zwischen 5 : 1 und 1 : 1.

Als Hilfsmittel kommen z.B. Trennmittel in Betracht, wie sie in der EP-A-227 092, EP-A-192 435 oder den dort zitierten Patentanmeldungen spezifiziert sind, darüber hinaus besonders organische Additive, welche das Auskristallisieren der Transferfarbstoffe bei Lagerung und beim Erhitzen des Farbbandes verhindern, z.B. Cholesterin oder Vanillin.

Inerte Träger sind beispielsweise Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben des Thermokopfes mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 $\mu$m, vorzugsweise 5 bis 10 $\mu$m.

Als Farbstoffnehmerschicht kommen prinzipiell alle temperaturstabilen Kunststoffschichten mit Affinität zu den zu transferierenden Farbstoffen in Betracht, deren Glasumwandlungstemperatur (Tg) vorzugsweise im Temperaturbereich $50\,^\circ C < Tg < 100\,^\circ C$ liegen sollte, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Wie oben ausgeführt, erfolgt die übertragung vorzugsweise mittels eines Thermokopfes, der auf eine Temperatur von $\geqq 300\ ^\circ C$ aufheizbar sein muß, damit der Farbstofftransfer im Zeitbereich t: $0 < t < 15$ msec erfolgen kann. Dabei migriert der Farbstoff aus dem Transferblatt und diffundiert in die Oberflächenbeschichtung des Aufnahmemediums.

Im Vergleich zu den bei den bekannten Verfahren verwendeten Farbstoffe zeichnen sich die bei den erfindungsgemäßen Verfahren übertragenen Farbstoffe im allgemeinen durch verbesserte Migrationseigenschaften im Aufnahmemedium bei Raumtemperatur, leichtere thermische Transferierbarkeit, leichtere technische Zugänglichkeit, bessere Resistenz gegen Feuchtigkeit und chemische Stoffe, höhere Farbstärke, bessere Löslichkeit, höhere thermische und photochemische Stabilität und insbesondere durch höhere Farbtonreinheit aus.

Die Farbtonreinheit ergibt sich aufgrund des steileren Anstiegs der Hauptabsorptionsbande sowie der höheren Transparenz im blauen und grünen Spektralbereich.

Mit den neuen Farbstoffen kann der Farbbereich Rot bis Türkis lückenlos abgedeckt werden. Von besonderem Interesse sind dabei Magenta- und Cyanfarbstoffe, welche sich aufgrund ihrer außergewöhnlichen Brillanz als Grundfarben für die subtraktive Farbmischung hervorragend eignen.

Einzelheiten der Herstellung können den Beispielen entnommen werden, in denen sich Angaben über Prozente, sofern nicht anders vermerkt, auf das Gewicht beziehen.

Die folgenden Beispiele sollen die Erfindung näher erläutern.

Herstellung der Farbstoffe

Beispiel H1

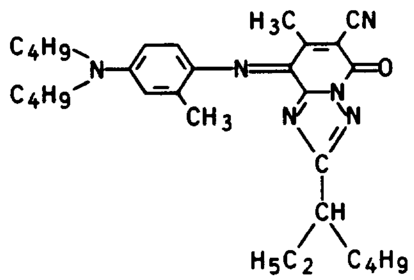

11 g N,N-Dibutyl-m-toluidin wurden wäßrig salzsauer mit Natriumnitrit bei 0 °C bis 5 °C nitrosiert. Nach 2 Stunden wurde mit 25-%igem Ammoniakwasser bei 0 bis 10 °C alkalisch gestellt und mit 150 ml Methylenchlorid ausgeschüttelt. Die organische Phase wurde anschließend zu einer Suspension von 13,6 g der Verbindung der Formel

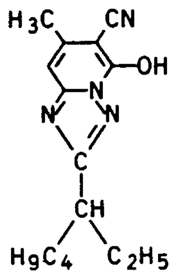

in Acetanhydrid bei Raumtemperatur unter Rühren zugegeben. Die Reaktion setzte sofort unter leichter Wärmetönung (32 °C) ein. Es wurde noch 2 Stunden bei Raumtemperatur nachgerührt, auf 40 °C erhitzt und Wasser zugegeben, um Acetanhydrid zu hydrolysieren. Die organische Phase wurde im Scheidetrichter dreimal mit Wasser ausgeschüttelt und am Rotationsverdampfer eingeengt. Nach Aufrühren mit Wasser wurde mit Bicarbonatlösung neutralisiert, abgesaugt, neutral gewaschen und bei Raumtemperatur getrocknet.

| | |
|---|---|
| Ausbeute: | 23,3 g = 92 % der Theorie |
| Festpunkt: | 147 °C |
| λmax(THF): | 615 nm |
| $R_f$-Wert: | 0,60 (Toluol/Essigester = 8:2). |

Analog Beipiel H1 wurden die folgenden Farbstoffe hergestellt, wobei Methylenchlorid jeweils vollständig abdestilliert und die Reaktion bei 120 °C durchgeführt wurde.

Beispiel H2

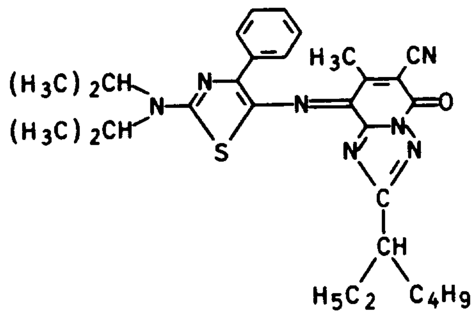

Ausbeute: 41 % der Theorie

Festpunkt: ≈ 175 °C

$\lambda_{max}$(THF): 614 nm

$R_f$-Wert: 0,36 (Toluol/Essigester = 8:2)

Beispiel H3

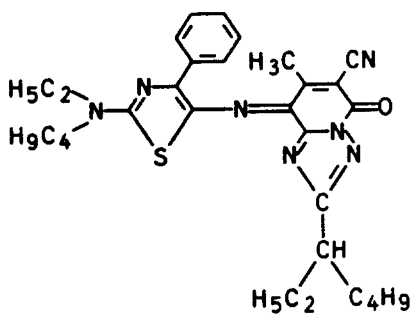

Ausbeute: 36 % der Theorie

$\lambda_{max}$(THF): 611 nm

$R_f$-Wert: 0,38 (Toluol/Essigester = 8:2)

Beispiel H4

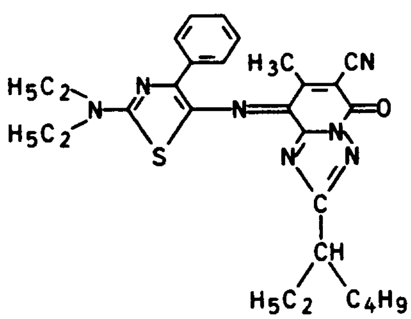

Ausbeute: 29 % der Theorie

Festpunkt: ≈ 180 °C

$\lambda_{max}$(THF): 610 nm

$R_f$-Wert: 0,29 (Toluol/Essigester = 8:2)

Beispiel H5

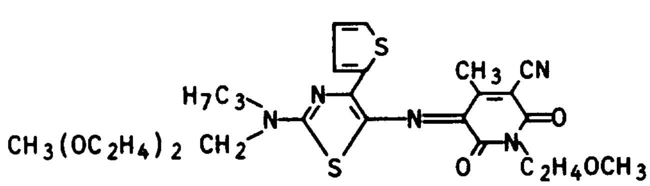

Ausbeute: 30 % der Theorie

$\lambda_{max}$ (THF): 626 nm

$R_f$-Wert: 0,36 (Essigester)

Beispiel H6

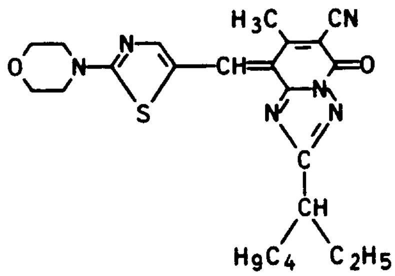

8,3 g 2-Morpholino-5-formylthiazol und 13,6 g der Verbindung der Formel

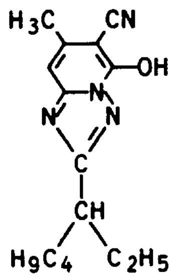

wurden in 100 ml Methylenchlorid gelöst. Nach Zugabe von 100 ml Acetanhydrid wurde Methylenchlorid abdestilliert und die Temperatur auf 120 °C gesteigert. Nach Abkühlung unter Rühren auf 100 °C fiel das Zielprodukt aus. Nach Zugabe von 100 ml Methanol wurde über Nacht verrührt, abgesaugt, mit Methanol gewaschen und getrocknet.

| | |
|---|---|
| Ausbeute: | 17,1 g = 76 % der Theorie |
| Festpunkt: | > 210 °C |
| λmax(THF): | 531 nm |
| $R_f$-Wert: | 0,45 (Essigester). |

Analog Beispiel H6 wurden die folgenden Farbstoffe synthetisiert:

Beispiel H7

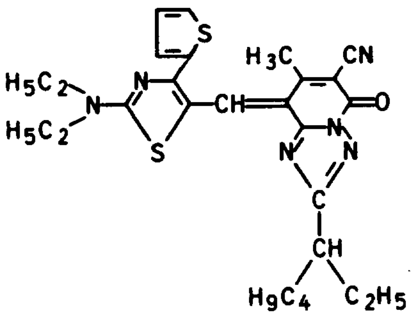

Ausbeute: 93 % der Theorie

Festpunkt: ≈ 143 °C

$\lambda_{max}$(THF): 576 nm

$R_f$-Wert: 0,26 (Toluol/Essigester = 8:2)

Beispiel H8

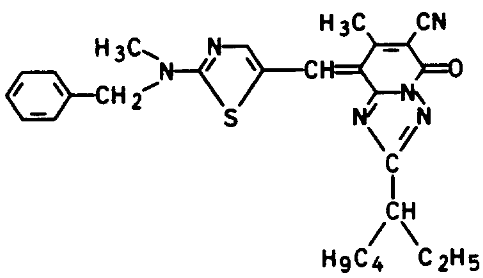

Ausbeute: 85 % der Theorie

Festpunkt: ≈ 188 °C

$\lambda_{max}$(THF): 532 nm

$R_f$-Wert: 0,69 (Essigester)

Beispiel H9

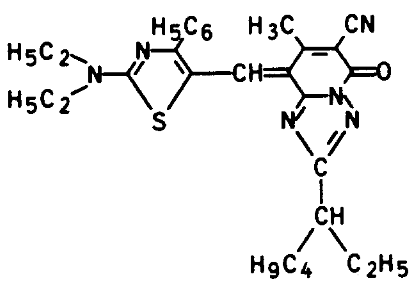

Ausbeute: 64 % der Theorie

Festpunkt: ≈ 205 °C

Sublimation: 200 °C

$\lambda_{max}$(THF): 556 nm

$R_f$-Wert: 0,21 (Toluol/Essigester = 8:2)

Beispiel H 10 *

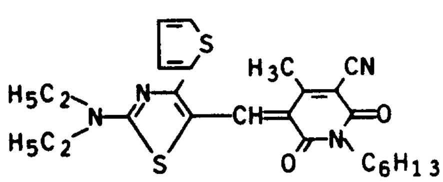

Ausbeute: 31 % der Theorie

Festpunkt: ≈ 218 °C

$\lambda_{max}$(THF): 547 nm

Beispiel H 11 *

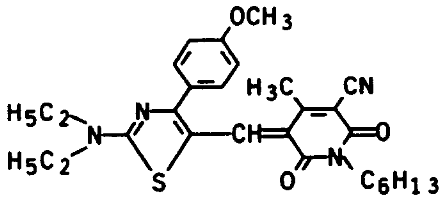

Ausbeute: 19 % der Theorie
Festpunkt: ≈ 200 °C
$\lambda_{max}$(THF): 536 nm

Beispiel H 12

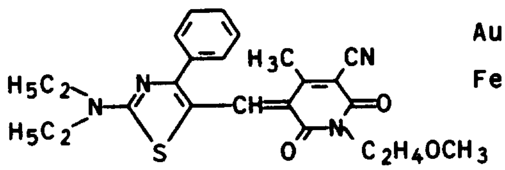

Ausbeute: 55 % der Theorie
Festpunkt: ≈ 225 °C
Sublimation: 214 °C
(THF): 528 nm
$\lambda$ max

Transfer der Farbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variiert und die Transferzeit auf 2 Minuten festgelegt wurde.

A) Allgemeines Rezept für die Beschichtung der Träger mit Farbstoff:
1 g Bindemittel wurden in 8 ml Toluol/Ethanol (8:2 v/v) bei 40 bis 50 °C gelöst. Dazu wurde eine Lösung aus 0,25 g Farbstoff und gegebenenfalls Hilfsmittel in 5 ml Tetrahydrofuran eingerührt. Die so erhaltene Druckpaste wurde mit einer 80 µm Rakel auf eine Polyesterfolie (Dicke: 6 bis 10 µm) abgezogen und mit einem Fön getrocknet.

B) Prüfung auf thermische Transferierbarkeit
Die verwendeten Farbstoffe wurden in der folgenden Weise geprüft:
Die den zu prüfenden Farbstoff in der Beschichtungsmasse (Vorderseite) enthaltende Polyesterfolie (Geber) wurde mit der Vorderseite auf kommerziell erhältliches Hitachi Color Video Print Paper (Nehmer)

*) In den Beispielen H 10 und H 11 wurde jeweils ein feuchtes Gemisch aus

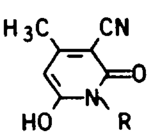

R = 80 % $C_6H_{13}$ und
20 % Mischung aus $C_4H_9$, $C_2H_5$ und $C_3H_7$

verwendet.

gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta\left[\frac{1}{T}\right]}$$

Zur vollständigen Charakterisierung wurde aus den Auftragungen zusätzlich die Temperatur T*[°C] entnommen, bei der die Extinktion A der angefärbten Nehmerpapiere den Wert 1 erreicht.

Die in den folgenden Tabellen aufgeführten Farbstoffe wurden nach A) verarbeitet und die erhaltenen, mit Farbstoff beschichteten Träger nach B) auf das Transferverhalten geprüft. In den Tabellen sind zum Teil die Thermotransferparameter T* und $\Delta E_T$, die Absorptionsmaxima der Farbstoffe λmax (gemessen in Methylenchlorid, falls nicht anders vermerkt,) und die verwendeten Bindemittel aufgeführt. Das Gewichtsverhältnis von Farbstoff:Bindemittel beträgt immer 1:4. In den Fällen, in denen ein Hilfsmittel zugegen ist, beträgt das Gewichtsverhältnis Farbstoff : Hilfsmittel 1 : 0,75.

Dabei gelten folgende Abkürzungen:

BM = Bindemittel (EC = Ethylcellulose, EHEC = Ethylhydroxyethylcellulose, AC = Celluloseacetobutyrat, MS = Mischung aus Polyvinylbutyrat und Ethylcellulose im Gewichtsverhältnis 2:1)

F = Farbstoff

HM = Hilfsmittel (Chol = Cholesterin)

Tabelle 1

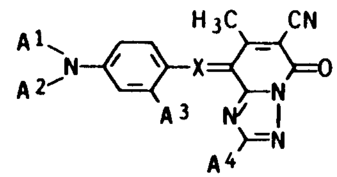

| Bsp.-Nr. | $A^1$ | $A^2$ | $A^3$ | X | $A^4$ | λ [nm] | BM | HM | $T^*$ [°C] | $\Delta E_T \left[\frac{kcal}{mol}\right]$ |
|---|---|---|---|---|---|---|---|---|---|---|
| 1 | $CH_3$ | $CH(CH_3)_2$ | H | N | $CH<^{C_2H_5}_{C_4H_9}$ | 610 | MS | — | 108 | 15 |
| 2 | $C_2H_5$ | $C_6H_{13}$ | H | N | $CH<^{C_2H_5}_{C_4H_9}$ | 610 | MS | — | 89 | 15 |
| 3 | $C_4H_9$ | $C_4H_9$ | $CH_3$ | N | $CH<^{C_2H_5}_{C_4H_9}$ | 623 | MS | — | 90 | 17 |
| 4 | $C_2H_5$ | $C_4H_9$ | $CH_3$ | N | $CH<^{C_2H_5}_{C_4H_9}$ | 621 | MS | — | 89 | 16 |
| 5 | $C_4H_9$ | $C_4H_9$ | $CH_3$ | N | $CH<^{C_3H_7}_{C_4H_9}$ | 621 | MS | — | 91 | 16 |
| 6 | $C_4H_9$ | $C_2H_4CN$ | H | N | $CH<^{C_2H_5}_{C_4H_9}$ | 590 | MS | — | 111 | 14 |

Tabelle 1 Forts.

| Bsp.-Nr. | $A^1$ | $A^2$ | $A^3$ | X | $A^4$ | λ [nm] | BM | HM | $T^*$ [°C] | $\Delta E_T\left[\frac{kcal}{mol}\right]$ |
|---|---|---|---|---|---|---|---|---|---|---|
| 7 | $C_2H_5$ | $C_2H_5$ | $NHCOCH_3$ | N | $CH\genfrac{}{}{0pt}{}{C_2H_5}{C_4H_9}$ | 619 | MS | — | 87 | 19 |
| 8 | $C_2H_5$ | $C_2H_5$ | $NHCOCH_3$ | N | $CH\genfrac{}{}{0pt}{}{C_3H_7}{C_4H_9}$ | 619 | MS | — | 89 | 18 |
| 9 | $C_2H_5$ | $C_4H_9$ | $NHCOCH_3$ | N | $C_3H_6OC_2H_4OC_4H_9$ | 620 | EHEC | — | 93 | 18 |
| 10 | $C_4H_9$ | $C_4H_9$ | $NHCOCH_3$ | N | $CH\genfrac{}{}{0pt}{}{C_2H_5}{C_4H_9}$ | 623 | MS | — | 110 | 15 |
| 11 | $C_2H_5$ | $C_2H_5$ | $NHSO_2N(CH_3)_2$ | N | $CH\genfrac{}{}{0pt}{}{C_2H_5}{C_4H_9}$ | 618 | MS | — | 90 | 14 |
| 12 | $C_2H_5$ | $C_2H_5$ | H | CH | $CH\genfrac{}{}{0pt}{}{C_2H_5}{C_4H_9}$ | 559 | MS | — | 89 | 11 |
| 13 | $CH_3$ | $CH_3$ | H | CH | $CH\genfrac{}{}{0pt}{}{C_2H_5}{C_4H_9}$ | 554 | MS | — | 112 | 16 |
| 14 | $C_4H_9$ | $C_2H_5$ | $OCH_3$ | CH | $CH\genfrac{}{}{0pt}{}{C_2H_5}{C_4H_9}$ | | AC | Chol | 87 | 13 |
| 15 | $C_4H_9$ | $C_2H_5$ | $OCH_3$ | N | $C_4H_8OC_3H_7$ | | EC | — | 92 | 16 |

Tabelle 2

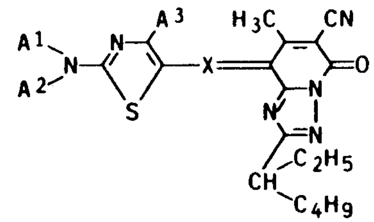

| Bsp.-Nr. | $A^1$ | $A^2$ | $A^3$ | X | λ [nm] | BM | HM | $T^*$ [°C] | $\Delta E_T \left[\frac{kcal}{mol}\right]$ |
|---|---|---|---|---|---|---|---|---|---|
| 16 | $C_2H_5$ | $C_4H_9$ | $C_6H_5$ | N | 612 | MS | — | 86 | 16 |
| 17 | $C_2H_5$ | $C_2H_5$ | $C_6H_5$ | N | 615 | MS | — | 82 | 16 |
| 18 | $CH(CH_3)_2$ | $CH(CH_3)_2$ | $C_6H_5$ | N | 617 | MS | — | 90 | 17 |
| 19 | $C_2H_5$ | $C_2H_5$ | 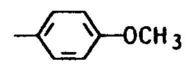 | N | 624 | MS | — | 90 | 13 |
| 20 | $C_2H_5$ | $C_2H_5$ | 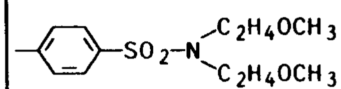 | N | 621 | MS | — | 92 | 12 |
| 21 | $C_2H_5$ | $C_4H_9$ | 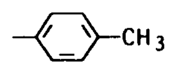 | N | 612 | MS | — | 84 | 17 |
| 22 | $C_2H_5$ | $C_4H_9$ | 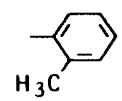 | N | 611 | MS | — | 85 | 16 |
| 23 | $C_2H_5$ | $C_2H_5$ | $C_6H_5$ | CH | 560 | MS | — | 85 | 12 |
| 24 | $C_2H_5$ | $C_2H_5$ | Thien-2-yl | CH | 579 | MS | — | 90 | 16 |
| 25 | Benzyl | $CH_3$ | H | CH | 537 | MS | — | 88 | 8 |
| 26 | $C_4H_9$ | $C_2H_5$ | $C_6H_5$ | CH | 561 | MS | — | 90 | 12 |
| 27 | $C_2H_5$ | $C_2H_5$ | 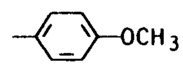 | CH | 566 | MS | — | 109 | 10 |

Tabelle 3

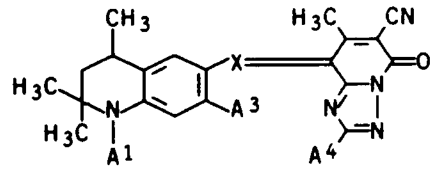

| Bsp.-Nr. | $A^1$ | $A^3$ | X | $A^4$ | λ [nm] | BM | HM | $T^*$ [°C] | $\Delta E_T \left[\frac{kcal}{mol}\right]$ |
|---|---|---|---|---|---|---|---|---|---|
| 28 | $C_2H_4OC_4H_9$ | H | N | $CH\genfrac{}{}{0pt}{}{C_2H_5}{C_4H_9}$ | 631 | MS | — | 110 | 24 |
| 29 | $C_6H_{13}$ | H | N | $CH\genfrac{}{}{0pt}{}{C_2H_5}{C_4H_9}$ | 636 | EC | Chol | 107 | 22 |
| 30 | $C_3H_7$ | $CH_3$ | N | $C_3H_6OC_2H_4OC_4H_9$ | 640 | EC | — | 100 | 16 |
| 31 | $C_2H_5$ | H | CH | $CH\genfrac{}{}{0pt}{}{C_2H_5}{C_4H_9}$ | — | MS | — | 98 | 15 |
| 32 | $C_2H_4OC_4H_9$ | $CH_3$ | CH | $CH\genfrac{}{}{0pt}{}{C_2H_5}{C_4H_9}$ | — | EC | — | 100 | 16 |
| 33 | H | $NHCOCH_3$ | N | $CH\genfrac{}{}{0pt}{}{C_2H_5}{C_4H_9}$ | 616 | MS | — | 98 | 14 |

Tabelle 4

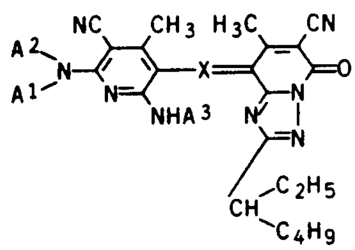

| Bsp.-Nr. | $A^1$ | $A^2$ | $A^3$ | X | λ [nm] | BM | HM | $T^*$ [°C] | $\Delta E_T \left[\frac{kcal}{mol}\right]$ |
|---|---|---|---|---|---|---|---|---|---|
| 34 | H | $CH(CH_3)_2$ | $CH(CH_3)_2$ | N | 608 | MS | — | 101 | 16 |
| 35 | $C_2H_5$ | $C_3H_6OCH_3$ | $C_3H_6OCH_3$ | N | 619 | MS | — | 94 | 17 |

Tabelle 5

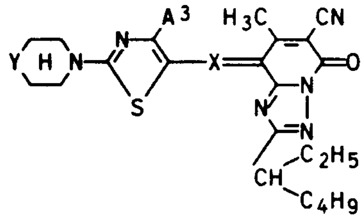

| Bsp.-Nr. | Y | $A^3$ | X | λ [nm] | BM | HM | $T^*$ [°C] | $\Delta E_T$ [kcal/mol] |
|---|---|---|---|---|---|---|---|---|
| 36 | $CH_2$ | $C_6H_5$ | N | 616 | MS | — | 90 | 14 |
| 37 | O | $C_6H_5$ | N | 612 | MS | — | 92 | 15 |
| 38 | O | H | CH | 537 | MS | — | 87 | 13 |

Tabelle 6

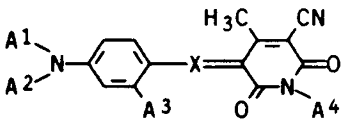

| Bsp.-Nr. | $A^1$ | $A^2$ | $A^3$ | X | $A^4$ | λ [nm] | BM | HM | $T^*$ [°C] | $\Delta E_T$ [kcal/mol] |
|---|---|---|---|---|---|---|---|---|---|---|
| 39 | $C_2H_5$ | $C_2H_5$ | $NHCOCH_3$ | N | 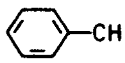$-CH_2OC_2H_4$ | 593 | EC | – | 129 | 15 |
| 40 | $C_2H_5$ | $C_2H_5$ | $NHCOCH_3$ | N | 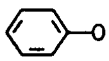$-O(CH_2)_4OC_3H_6$ | 593 | EC | – | 121 | 13 |
| 41 | $C_2H_5$ | $C_2H_5$ | $OCH_3$ | N | 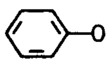$-O(CH_2)_4OC_3H_6$ | 570 | EC | – | 127 | 10 |
| 42 | $C_2H_5$ | $C_2H_5$ | $OCH_3$ | N | 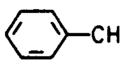$-CH_2OC_3H_6$ | 570 | EC | – | 117 | 10 |
| 43 | $C_2H_5$ | $C_2H_5$ | H | CH | $C_6H_{13}$ | 528 | MS | – | 78 | 14 |

Tabelle 7

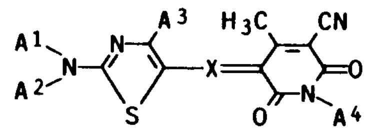

| Bsp.-Nr. | A1 | A2 | A3 | X | A4 | λ [nm] | BM | HM | $T^*$ [°C] | $\Delta E_T$ [kcal/mol] |
|---|---|---|---|---|---|---|---|---|---|---|
| 44 | $C_3H_7$ | $CH_2(C_2H_4O)_2CH_3$ | 2-Thienyl | N | $C_2H_4OCH_3$ | 626* | EC | — | 100 | 14 |
| 45 | $C_2H_5$ | $(C_2H_4O)_2C_2H_5$ | $C_6H_5$ | N | $C_3H_6OC_2H_5$ | 584* | MS | — | 94 | 13 |
| 46 | $C_3H_7$ | $CH_2(C_2H_4O)_2CH_3$ | 2-Thienyl | N | $C_3H_6OCH_3$ | 624* | MS | — | 98 | 12 |
| 47 | $C_2H_5$ | $(C_2H_4O)_3C_2H_5$ | $C_6H_5$ | N | $C_2H_4OCH_3$ | 584* | EC | — | 94 | 14 |
| 48 | $C_2H_5$ | $(C_2H_4O)_3C_2H_5$ | $C_6H_5$ | N | $C_3H_6OCH_3$ | 584* | MS | — | 96 | 13 |
| 49 | $C_2H_5$ | $CH_2(C_2H_4O)_2CH_3$ | $C_6H_5$ | N | $C_2H_4OCH_3$ | 585* | MS | — | 97 | 14 |
| 50 | $C_2H_5$ | $C_2H_5$ | $C_6H_5$ | CH | $C_2H_4OCH_3$ | 534 | MS | — | 91 | 13 |
| 51 | $C_2H_5$ | $C_2H_5$ | 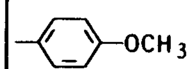 | CH | $C_6H_{13}$ | 537 | MS | — | 84 | 18 |
| 52 | $C_2H_5$ | $C_2H_5$ | Thien-2-y | CH | $C_6H_{13}$ | 551 | MS | — | 88 | 19 |

*) $\lambda_{max}$ wurde in THF gemessen

Tabelle 8

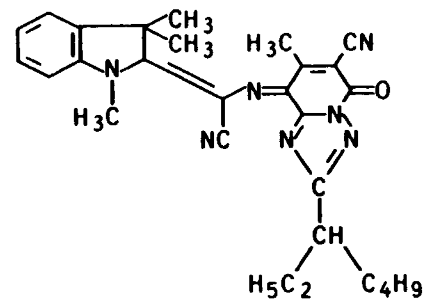

| Bsp.-Nr. | λ [nm] | BM | HM | T* [°C] | $\Delta E_T \left[\frac{kcal}{mol}\right]$ |
|---|---|---|---|---|---|
| 53 | 590 | MS | — | 99 | 12 |

Ähnlich günstige Ergebnisse werden mit den in der Tabelle 9 aufgeführten Farbstoffe erhalten. (Die römischen Ziffern unter "D" beziehen sich dabei auf die weiter oben aufgeführten Reste der Formel II.)

Tabelle 9

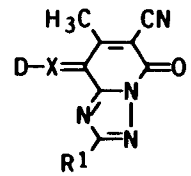

| Bsp.-Nr. | D | X | $L^2$ | $R^1$ | $L^3$ | $R^5$ | $R^6$ | Farbe |
|---|---|---|---|---|---|---|---|---|
| 54 | IIa | CH | $C_4H_9$ | $CH<^{CH_3}_{CH_3}$ | $C_2H_5$ | H | H | Magenta Violett |
| 55 | IIa | CH | $C_2H_5$ | $C_2H_5$ | $C_3H_7$ | H | H | Magenta Violett |
| 56 | IIa | CH | $C_2H_4CO_2C_2H_5$ | $C_4H_8OCH_3$ | $C_2H_5$ | H | H | Magenta |
| 57 | IIa | CH | $C_2H_5$ | $C_3H_6OC_4H_9$ | $C_2H_5$ | H | $CH_3$ | Magenta Violett |
| 58 | IIa | CH | $CH(CH_3)_2$ | $CH<^{C_2H_5}_{C_4H_9}$ | $CH(CH_3)_2$ | H | $OCH_3$ | Magenta Violett |
| 59 | IIa | CH | $C_4H_9$ | $(CH_2)_2CH<^{C_2H_5}_{CH_3}$ | $C_2H_5$ | H | $CH_3$ | Magenta Violett |
| 60 | IIa | CH | $C_4H_9$ | $C_7H_{15}$ | $C_2H_5$ | H | $NHCOCH_3$ | Magenta Violett |
| 61 | IIa | CH | $C_3H_7$ | $(CH_2)_2CO_2C_4H_9$ | $C_3H_6OCH_3$ | H | H | Magenta |
| 62 | IIa | N | $C_4H_9$ | $(CH_2)_2CO_2C_4H_9$ | $C_4H_9$ | H | H | Cyan |

Tabelle 9 Forts.

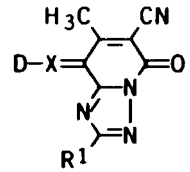

| Bsp.-Nr. | D | X | $L^2$ | $R^1$ | $L^3$ | $R^5$ | $R^6$ | Farbe |
|---|---|---|---|---|---|---|---|---|
| 63 | IIa | N | $C_2H_5$ | $C_3H_6OC_2H_4OCH_3$ | $C_2H_5$ | H | $C_2H_5$ | Cyan |
| 64 | IIa | N | $C_2H_5$ | $CH{<}^{CH_3}_{CH_3}$ | $C_3H_7$ | H | $CH_3$ | Cyan |
| 65 | IIa | N | $CH(CH_3)_2$ | $(CH_2)_4OC_3H_7$ | $C_2H_5$ | H | $C_2H_5$ | Cyan |
| 66 | IIa | N | $C_4H_9$ | $CH{<}^{C_3H_7}_{C_4H_9}$ | $C_2H_5$ | H | $NHCOCH_3$ | Cyan |
| 67 | IIa | N | $C_3H_7$ | $CH{<}^{C_2H_5}_{C_4H_9}$ | $C_2H_5$ | H | $NHSO_2C_4H_9$ | Cyan |
| 68 | IIa | N | $C_2H_5$ | $C_2H_4OC_4H_9$ | $C_7H_{15}$ | H | $NHSO_2C_2H_5$ | Cyan |
| 69 | IIa | N | H | $CH{<}^{C_2H_5}_{C_4H_9}$ | $C_4H_9$ | $OCH_3$ | $CH_3$ | Cyan |
| 70 | IIa | N | $C_2H_4CN$ | $(CH_2)_2OC_6H_{13}$ | $C_4H_9$ | H | $CH_3$ | Cyan |
| 71 | IIa | N | H | $CH{<}^{C_2H_5}_{C_4H_9}$ | $C_5H_{11}$ | $OC_2H_5$ | $CH_3$ | Cyan |
| 72 | IIb | CH | $C_2H_5$ | $CH{<}^{C_2H_5}_{C_4H_9}$ | – | – | H | Magenta Violett |

Tabelle 9 (Forts.)

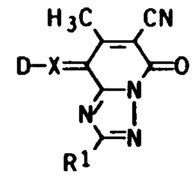

| Bsp.-Nr. | D | X | $L^2$ | $R^1$ | $L^4$ | $R^6$ | $R^5$ | Farbe |
|---|---|---|---|---|---|---|---|---|
| 73 | IIb | CH | $C_4H_9$ | $(CH_2)_4OC_4H_9$ | – | – | H | Violett |
| 74 | IIb | N | $C_2H_5$ | $CH(C_2H_5)C_4H_9$ | – | – | H | Cyan |
| 75 | IIc | CH | $C_4H_9$ | $(C_2H_4O)_2C_4H_9$ | – | – | H | Magenta Violett |
| 76 | IIc | CH | $C_3H_6OC_4H_9$ | $CH(C_2H_5)C_4H_9$ | – | – | H | Magenta Violett |
| 77 | IIc | CH | $C_2H_5$ | $(C_2H_4O)_2C_4H_9$ | – | – | H | Magenta Violett |
| 78 | IIc | CH | $C_2H_5$ | $C_3H_6OC_2H_4OC_6H_5$ | – | – | $CH_3$ | Violett |
| 79 | IIc | CH | $C_4H_9$ | $(CH_2)_2CO_2C_5H_{11}$ | – | – | $OCH_3$ | Violett |
| 80 | IIc | CH | $C_2H_5$ | $(CH_2)_2OC_5H_{11}$ | – | – | $C_2H_5$ | Violett |
| 81 | IIc | CH | $C_2H_4CN$ | $(CH_2)_2OC_5H_{11}$ | – | – | H | Magenta |
| 82 | IIc | CH | $C_2H_4OH$ | $(C_2H_4O)_2C_4H_9$ | – | – | $CH_3$ | Magenta |
| 83 | IIc | CH | $C_2H_4CO_2C_2H_5$ | $(C_2H_4O)_2C_4H_9$ | – | – | H | Magenta |

Tabelle 9 (Forts.)

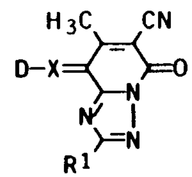

| Bsp.-Nr. | D | X | $L^2$ | $R^1$ | $L^4$ | $R^6$ | $R^5$ | Farbe |
|---|---|---|---|---|---|---|---|---|
| 84 | IIc | N | $(C_2H_4O)_2C_4H_9$ | CH $C_2H_5$ $C_4H_9$ | – | – | H | Cyan |
| 85 | IIc | N | $C_2H_5$ | $(CH_2)_4OC_3H_6OC_2H_5$ | – | – | $CH_3$ | Cyan Türkis |
| 86 | IIc | N | $C_4H_9$ | $CH_3$ | – | – | H | Cyan |
| 87 | IIc | N | H | $C_4H_8OC_3H_6OC_4H_9$ | – | – | $CH_3$ | Cyan |
| 88 | IIc | N | $C_3H_7$ | CH $C_6H_{13}$ $C_4H_9$ | – | – | $NHCOCH_3$ | Cyan Türkis |
| 89 | IIc | N | $C_2H_4CN$ | $C_3H_6OC_2H_4OC_4H_9$ | – | – | $CH_3$ | Cyan |
| 90 | IIc | N | $C_3H_6$ | $(C_2H_4O)_2C_4H_9$ | – | – | H | Cyan |
| 91 | IIc | N | $C_2H_5$ | $C_2H_4CO_2C_7H_{15}$ | – | – | $CH_3$ | Cyan Türkis |
| 92 | IIc | N | $C_2H_4OH$ | $C_3H_6OC_3H_6OC_2H_5$ | – | – | H | Cyan |
| 93 | IId | CH | – | CH $C_2H_5$ $C_4H_9$ | – | H | H | Gelb |
| 94 | IId | CH | – | $C_3H_6OC_4H_9$ | – | m-$CH_3$ | $OC_2H_5$ | Gelb |
| 95 | IId | CH | – | CH $C_2H_5$ $C_4H_9$ | – | m-$CO_2C_6H_{13}$ | H | Gelb |

Tabelle 9 (Forts.)

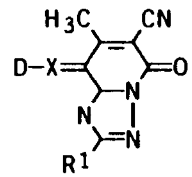

| Bsp.-Nr. | D | X | $L^2$ | $R^1$ | $L^3$ | R6 | $R^5$ | Farbe |
|---|---|---|---|---|---|---|---|---|
| 96 | IIe | CH | $C_3H_6OC_4H_9$ | $CH<^{C_2H_5}_{C_4H_9}$ | – | – | $CH_3$ | Magenta Violett |
| 97 | IIe | N | $C_3H_7$ | $C_3H_6OC_2H_4CH<^{C_2H_5}_{C_4H_9}$ | – | – | H | Cyan Türkis |
| 98 | IIe | N | $CH<^{C_2H_5}_{C_4H_9}$ | $CH<^{C_4H_9}_{C_2H_5}$ | – | – | $CH_3$ | Türkis |
| 99 | IIg | CH | – | $CH<^{C_2H_5}_{C_4H_9}$ | – | – | H | Magenta Violett |
| 100 | IIg | CH | – | $C_3H_6OC_2H_4OC_6H_5$ | – | – | $CH_3$ | Violett |
| 101 | IIg | N | – | $C_3H_6OC_2H_4OC_4H_9$ | – | – | H | Cyan |
| 102 | IIg | N | – | $CH<^{C_2H_5}_{C_5H_{11}}$ | – | – | $CH_3$ | Cyan Türkis |
| 103 | IIg | N | – | $C_3H_6OC_3H_7$ | – | – | $NHCOCH_3$ | Cyan Türkis |

Tabelle 10

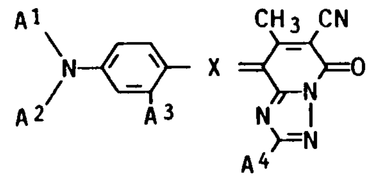

| Bsp.-Nr. | A1 | A2 | A3 | X | A4 | λ [mm] | BM | HM | T*[°C] | $\Delta E_T$ [kcal/mol] |
|---|---|---|---|---|---|---|---|---|---|---|
| 104 | $CH(CH_3)_2$ | $C_2H_5$ | $CH_3$ | N | 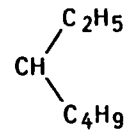 | 621 | EHEC | - | 96 | 12 |
| 105 | $C_3H_7$ | $C_2H_5$ | $CH_3$ | N | 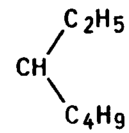 | 621 | EHEC | - | 111 | 14 |
| 106 | $C_4H_9$ | $C_4H_9$ | $NHCOC_3H_7$ | N | 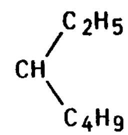 | 625 | EHEC | - | 105 | 10 |
| 107 | $-CH_2-$ 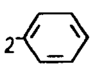 | $C_2H_5$ | H | CH | 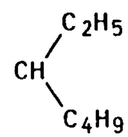 | 555 | EHEC | - | 100 | 9 |
| 108 | $C_2H_4OCOCH_2OCH_3$ | $C_2H_5$ | H | N | 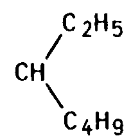 | 601 | MS | - | 87 | 10 |

Tabelle 10 (Forts.)

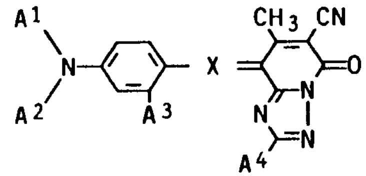

| Bsp.-Nr. | $A^1$ | $A^2$ | $A^3$ | X | $A^4$ | λ [mm] | BM | HM | T* [°C] | $\Delta E_T$ [kcal/mol] |
|---|---|---|---|---|---|---|---|---|---|---|
| 109 | $C_2H_4Cl$ | $C_2H_5$ | H | N | 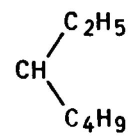 | 595 | MS | - | 84 | 9 |
| 110 | $C_2H_5$ | $C_2H_5$ | $NHCO_2C_2H_4OC_2H_5$ | N | 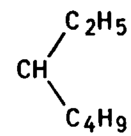 | 616 | MS | - | 76 | 10 |
| 111 | $-CH_2-$ 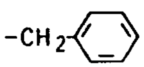 | $C_2H_5$ | H | N | 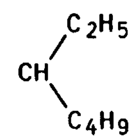 | 604 | MS | - | 76 | 8 |
| 112 | $C_2H_4OCOCH_3$ | $C_2H_5$ | H | N | 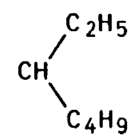 | 604 | EHEC | - | 104 | 10 |
| 113 | $-CH_2-$ 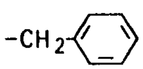 | $C_2H_5$ | $CH_3$ | N | 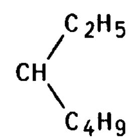 | 618 | MS | - | 78 | 10 |

Tabelle 10 (Forts.)

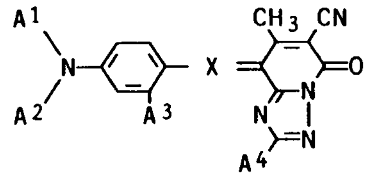

| Bsp.-Nr. | $A^1$ | $A^2$ | $A^3$ | X | $A^4$ | λ[mm] | BM | HM | T*[°C] | $\Delta E_T \left[\frac{kcal}{mol}\right]$ |
|---|---|---|---|---|---|---|---|---|---|---|
| 114 | $C_4H_9$ | $C_2H_5$ | $CH_3$ | N | 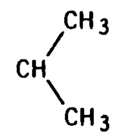 | 618 | MS | - | 94 | 11 |
| 115 | $C_4H_9$ | $C_4H_9$ | $CH_3$ | N | 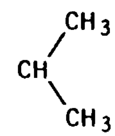 | 621 | MS | - | 94 | 11 |
| 116 | 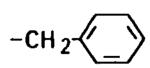 | $C_2H_5$ | $CH_3$ | N | 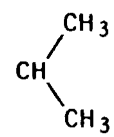 | 618 | MS | - | 80 | 8 |
| 117 | $C_4H_9$ | $C_4H_9$ | H | N | $C_3H_7$ | 616 | MS | - | 73 | 7 |
| 118 | $C_2H_5$ | $C_2H_5$ | $OCH(CH_3)_2$ | N | 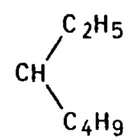 | 601 | MS | - | 82 | 9 |

Tabelle 10 (Forts.)

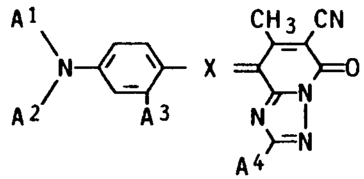

| Bsp.-Nr. | $A^1$ | $A^2$ | $A^3$ | X | $A^4$ | λ[mm] | BM | HM | T*[°C] | $\Delta E_T$ [kcal/mol] |
|---|---|---|---|---|---|---|---|---|---|---|
| 119 | $CH_3$ | $CH_3$ | H | CH | 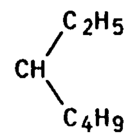 | 554 | MS | - | 112 | 16 |
| 120 | $C_2H_4OC_4H_9$ | $C_2H_5$ | H | N | 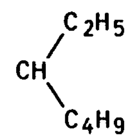 | 615 | MS | - | 109 | 11 |
| 121 | $C_2H_4CN$ | $C_4H_9$ | H | N | 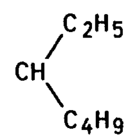 | 590 | MS | - | 111 | 13 |
| 122 | $C_4H_9$ | $C_4H_9$ | H | N | 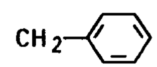 | 620 | MS | - | 110 | 12 |
| 123 | $C_4H_9$ | $C_2H_5$ | $CH_3$ | N | 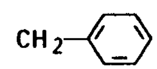 | 621 | MS | - | 117 | 16 |
| 124 | $C_4H_9$ | $C_2H_5$ | $CH_3$ | N | $CH_3$ | 619 | MS | - | 85 | 9 |
| 125 | $C_4H_9$ | $C_4H_9$ | $CH_3$ | N | $C_2H_5$ | 619 | MS | - | 83 | 10 |

Tabelle 10 (Forts.)

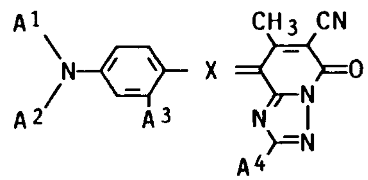

| Bsp.-Nr. | $A^1$ | $A^2$ | $A^3$ | X | $A^4$ | λ [mm] | BM | HM | T* [°C] | $\Delta E_T$ [kcal/mol] |
|---|---|---|---|---|---|---|---|---|---|---|
| 126 | $C_4H_9$ | $C_2H_5$ | $CH_3$ | N | $C_2H_5$ | 621 | MS | - | 119 | 13 |
| 127 | $C_4H_9$ | $C_4H_9$ | $CH_3$ | N | 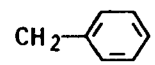 | 625 | MS | - | 88 | 12 |
| 128 | $C_4H_9$ | $C_4H_9$ | $CH_3$ | N | $CH_3$ | 621 | MS | - | 108 | 10 |
| 129 | $C_4H_9$ | $CH_3$ | H | N | 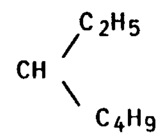 | 607 | MS | - | 82 | 9 |
| 130 | $C_2H_5$ | $C_2H_5$ | $CH_3$ | N | 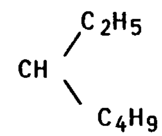 | 615 | MS | - | 83 | 11 |
| 131 | $(CH_2)_2CH(CH_3)_2$ | $C_2H_5$ | $CH_3$ | N | 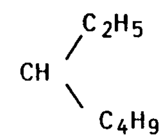 | 620 | EHEC | - | 92 | 13 |
| 132 | $C_2H_4CH(CH_3)_2$ | $C_2H_5$ | $CH_3$ | N | $C(CH_3)_3$ | 621 | MS | - | 102 | 8 |

Tabelle 10 (Forts.)

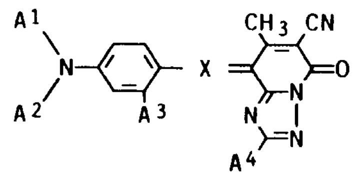

| Bsp.-Nr. | $A^1$ | $A^2$ | $A^3$ | X | $A^4$ | λ [mm] | BM | HM | T*[°C] | $\Delta E_T$ [kcal/mol] |
|---|---|---|---|---|---|---|---|---|---|---|
| 133 | $CH_2CH(CH_3)_2$ | $C_4H_9$ | H | N | $C(CH_3)_3$ | 615 | MS | - | 83 | 11 |
| 134 | $C_4H_9$ | $C_4H_9$ | $OCH_3$ | N | 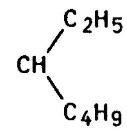 | 603 | MS | - | 98 | 6 |
| 135 | $C_2H_4OCONHC_4H_9$ | $C_2H_5$ | H | N | 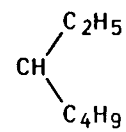 | 596 | MS | - | 97 | 16 |
| 136 | $C_2H_5$ | $C_2H_5$ | H | N | 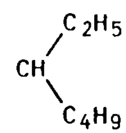 | 608 | MS | - | 97 | 14 |
| 137 | $C_2H_5$ | $C_2H_5$ | $NHCOCH_2OCH_3$ | N | 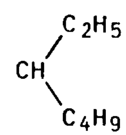 | 622 | MS | - | 93 | 8 |
| 138 | $C_2H_4OC_2H_5$ | $C_2H_5$ | $NHCOCH_3$ | N | 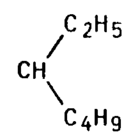 | 623 | MS | - | 88 | 8 |

Tabelle 10 (Forts.)

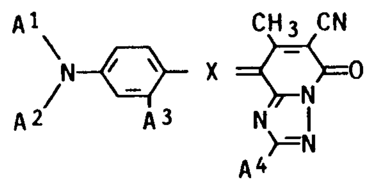

| Bsp.-Nr. | A1 | A2 | A3 | X | A4 | λ [mm] | BM | HM | T* [°C] | $\Delta E_T$ [kcal/mol] |
|---|---|---|---|---|---|---|---|---|---|---|
| 139 | $C_2H_5$ | $C_2H_5$ | $NHCOCH_2$- 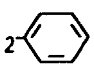 | N | 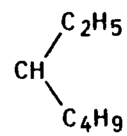 | 624 | MS | - | 81 | 8 |
| 140 | $C_2H_4O_2CCH_3$ | $C_2H_4O_2CH_3$ | $NHCOCH_2OCH_3$ | N | 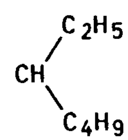 | 615 | MS | - | 82 | 8 |
| 141 | $C_2H_4O_2CC_2H_5$ | $C_2H_4O_2CC_2H_5$ | $NHCOC_2H_5$ | N | 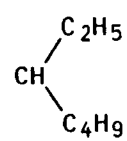 | 616 | MS | - | 83 | 10 |

Tabelle 11

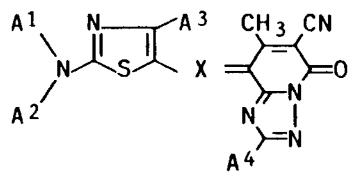

| Bsp.-Nr. | A1 | A2 | A3 | X | A4 | λ [mm] | BM | HM | T* [°C] | $\Delta E_T$ [kcal/mol] |
|---|---|---|---|---|---|---|---|---|---|---|
| 142 | $C_2H_5$ | $C_2H_5$ | 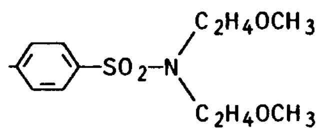 | CH | 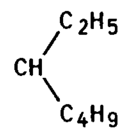 | 563 | MS | – | 155 | 3 |
| 143 | $C_2H_5$ | $C_2H_5$ | 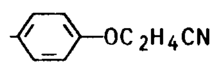 | N | 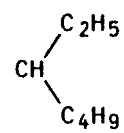 | 623 | MS | – | 101 | 10 |

Tabelle 12

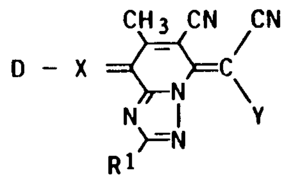

| Bsp.-Nr. | D | X | $L^2$ | $R^1$ | $L^3$ | Y | $R^5$ | $R^6$ | $R^8$ | $\lambda_{max}$ (nm) |
|---|---|---|---|---|---|---|---|---|---|---|
| 144 | IIa | N | $CH_3$ | 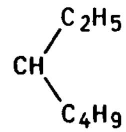 | $CH_3$ | $CO_2C_4H_9$ | H | H | – | 680 |
| 145 | IIa | CH | $C_2H_5$ | 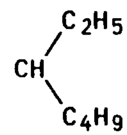 | $C_4H_9$ | $CO_2C_4H_9$ | H | H | – | 638 |
| 146 | IIk | CH | $C_2H_5$ | 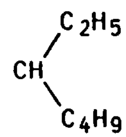 | $C_2H_5$ | CN | – | – | $C_6H_5$ | 636 |
| 147 | IIk | CH | $C_2H_5$ | 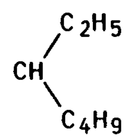 | $C_2H_5$ | CN | – | – | 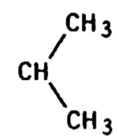 | 620 |

## Patentansprüche

**1.** Triazolopyridinfarbstoffe der Formel I

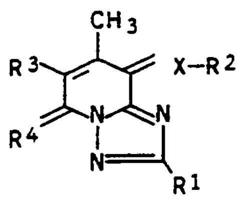

(I),

in der

- $R^1$ $C_1$-$C_{20}$-Alkyl, das gegebenenfalls substituiert ist und durch ein oder mehrere Sauerstoffatome unterbrochen sein kann, gegebenenfalls substituiertes Phenyl oder Hydroxy,
- $R^2$ einen 5- oder 6-gliedrigen carbocyclischen oder heterocyclischen Rest, der gegebenenfalls substituiert ist und benzoanelliert sein kann,
- $R^3$ Cyano, Carbamoyl, Carboxyl oder $C_1$-$C_4$-Alkoxycarbonyl,
- $R^4$ Sauerstoff oder einen Rest der Formel

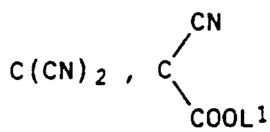

oder $C(COOL^1)_2$ ,
wobei $L^1$ jeweils für $C_1$-$C_8$-Alkyl, das gegebenenfalls durch 1 oder 2 Sauerstoffatome unterbrochen ist, steht, und

- X CH oder Stickstoff bedeuten.

**2.** Triazolopyridinfarbstoffe nach Anspruch 1, dadurch gekennzeichnet, daß $R^3$ Cyano bedeutet.

**3.** Triazolopyridinfarbstoffe nach Anspruch 1, dadurch gekennzeichnet, daß $R^2$ sich von einer Komponente aus der Benzol-, Indol-, Chinolin-, Aminonaphthalin-, Pyrrol-, Aminothiazol-, Benzimidazol-, Benzthiazol-, Aminothiophen- oder Diaminopyridinreihe ableitet.

**4.** Triazolopyridinfarbstoffe nach Anspruch 1, dadurch gekennzeichnet, daß $R^1$ $C_1$-$C_{12}$-Alkyl, das gegebenenfalls durch $C_1$-$C_6$-Alkanoyloxy, $C_1$-$C_8$-Alkoxyxcarbonyl, deren Alkylkette jeweils durch 1 oder 2 Sauerstoffatome unterbrochen sein kann, Phenyl oder $C_1$-$C_4$-Alkylphenyl substituiert ist und durch 1 oder 2 Sauerstoffatome unterbrochen sein kann, bedeutet.

**5.** Verfahren zur übertragung von Methinfarbstoffen von einem Träger auf ein mit Kunststoff beschichtetes Papier durch Diffusion mit Hilfe einer Energiequelle, dadurch gekennzeichnet, daß man einen Träger verwendet, auf dem sich ein oder mehrere Farbstoffe der Formel I und/oder Ia

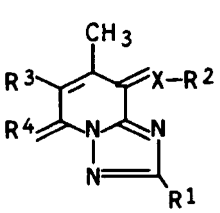

(I)

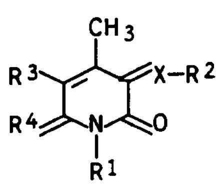

(Ia)

befinden, wobei

- $R^1$ $C_1$-$C_{20}$-Alkyl, das gegebenenfalls substituiert ist und durch ein oder mehrere Sauerstoffatome

unterbrochen sein kann, gegebenenfalls substituiertes Phenyl oder Hydroxy,

$R^2$ einen 5- oder 6-gliedrigen carbocyclischen oder heterocyclischen Rest, der gegebenenfalls substituiert ist und benzoanelliert sein kann,

$R^3$ Cyano, Carbamoyl, Carboxyl oder $C_1$-C4-Alkoxycarbonyl,

$R^4$ Sauerstoff oder einen Rest der Formel

$C(CN)_2$ , 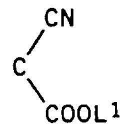

oder $C(COOL^1)_2$ ,

wobei $L^1$ jeweils für $C_1$-$C_8$-Alkyl, das gegebenenfalls durch 1 oder 2 Sauerstoffatome unterbrochen ist, steht, und

X CH oder Stickstoff bedeuten.

**Claims**

1. Triazolopyridine dyes of the formula I

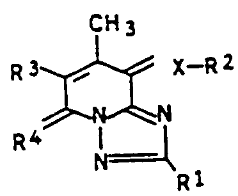

(I)

where

$R^1$ is $C_1$-$C_{20}$-alkyl, which may be substituted and interrupted by one or more oxygen atoms, or is substituted or unsubstituted phenyl or hydroxyl,

$R^2$ is a 5- or 6-membered carbocyclic or heterocyclic ring which may be substituted and benzofused,

$R^3$ is cyano, carbamoyl, carboxyl or $C_1$-$C_4$-alkoxycarbonyl,

$R^4$ is oxygen or a radical of the formula

$C(CN)_2$ , 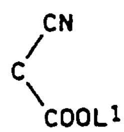

or $C(COOL^1)_2$ ,

where $L^1$ is in each case $C_1$-$C_8$-alkyl which may be interrupted by 1 or 2 oxygen atoms, and

X is CH or nitrogen.

2. Triazolopyridine dyes as claimed in claim 1, wherein $R^3$ is cyano.

3. Triazolopyridine dyes as claimed in claim 1, wherein $R^2$ is derived from a component of the benzene, indole, quinoline, aminonaphthalene, pyrrole, aminothiazole, benzimidazole, benzthiazole, aminothiophene or diaminopyridine series.

4. Triazolopyridine dyes as claimed in claim 1, wherein $R^1$ is $C_1$-$C_{12}$-alkyl, which may be substituted by $C_1$-$C_6$-alkanoyloxy, $C_1$-$C_8$-alkoxycarbonyl whose alkyl chains may each be interrupted by 1 or 2 oxygen atoms, phenyl or $C_1$-$C_4$-alkylphenyl and interrupted by 1 or 2 oxygen atoms.

5. A process for transferring a methine dyes from a transfer to plastic-coated paper by diffusion with the aid of an energy source, which comprises using a transfer on which there is or are situated one or more dyes of the formula I and/or Ia

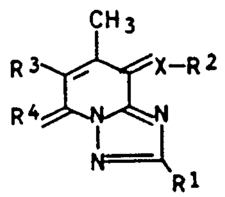

(I)

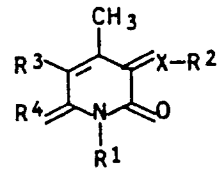

(Ia)

where

$R^1$ is $C_1$-$C_{20}$-alkyl, which may be substituted and interrupted by one or more oxygen atoms, or is substituted or unsubstituted phenyl or hydroxyl,

$R^2$ is a 5- or 6-membered carbocyclic or heterocyclic ring which may be substituted and benzofused,

$R^3$ is cyano, carbamoyl, carboxyl or $C_1$-$C_4$-alkoxycarbonyl,

$R^4$ is oxygen or a radical of the formula

$C(CN)_2$ , 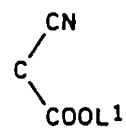

or $C(COOL^1)_2$ ,

where $L^1$ is in each case $C_1$-$C_8$-alkyl which may be interrupted by 1 or 2 oxygen atoms, and

X is CH or nitrogen.

**Revendications**

1. Colorants triazolopyridiniques de formule I

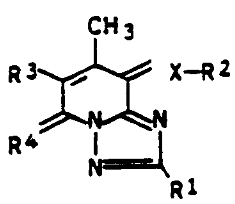

(I),

dans laquelle

$R^1$ représente un reste alkyle en $C_1$-$C_{20}$, qui est éventuellement substitué et peut être interrompu par un ou plusieurs atomes d'oxygène, un reste phényle éventuellement substitué ou un reste hydroxy,

$R^2$ représente un reste carbocyclique ou hétérocyclique pentagonal ou hexagonal, qui est éventuellement substitué et peut être benzocondensé,

$R^3$ représente un reste cyano, carbamoyle, carboxyle ou (alcoxy en $C_1$-$C_4$)carbonyle,

$R^4$ représente un atome d'oxygène ou un reste de formule

$C(CN)_2$, 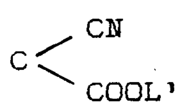

ou $C(COOL^1)_2$,
$L^1$ étant mis chaque fois pour un reste alkyle en $C_1$-$C_8$ qui est éventuellement interrompu par 1 ou 2 atomes d'oxygène, et
X représente CH ou un atome d'azote.

**2.** Colorants triazolopyridiniques selon la revendication 1, caractérisés en ce que $R^3$ représente un reste cyano.

**3.** Colorants triazolopyridiniques selon la revendication 1, caractérisés en ce que $R^2$ dérive d'un composant de la série du benzène, de l'indène, de la quinoléine, de l'aminonaphtalène, du pyrrole, de l'aminothiazole, du benzimidazole, du benzothiazole, de l'aminothiophène ou de la diaminopyridine.

**4.** Colorants triazolopyridiniques selon la revendication 1, caractérisés en ce que $R^1$ représente un reste alkyle en $C_1$-$C_{12}$ qui est éventuellement substitué par un radical alcanoyloxy en $C_1$-$C_6$, (alcoxy en $C_1$-$C_8$)carbonyle, dont les chaînes alkyle peuvent être interrompues chaque fois par 1 ou 2 atomes d'oxygène, phényle ou (alkyl en $C_1$-$C_4$)phényle, et qui peut être interrompu par 1 ou 2 atomes d'oxygène.

**5.** Procédé de transfert de colorants méthiniques entre un support et un papier revêtu d'une couche de matière plastique, par diffusion au moyen d'une source d'énergie, caractérisé en ce qu'on utilise un support sur lequel se trouvent un ou plusieurs colorants de formules I et/ou Ia

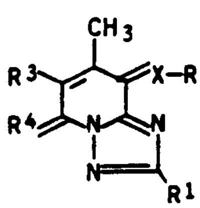

(I)

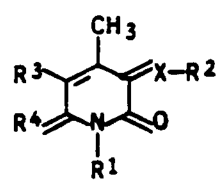

(Ia)

dans lesquelles
$R^1$ représente un reste alkyle en $C_1$-$C_{20}$, qui est éventuellement substitué et peut être interrompu par un ou plusieurs atomes d'oxygène, un reste phényle éventuellement substitué ou un reste hydroxy,
$R^2$ représente un reste carbocyclique ou hétérocyclique pentagonal ou hexagonal, qui est éventuellement substitué et peut être benzocondensé,
$R^3$ représente un reste cyano, carbamoyle, carboxyle ou (alcoxy en $C_1$-$C_4$)carbonyle,
$R^4$ représente un atome d'oxygène ou un reste de formule

$C(CN)_2$, 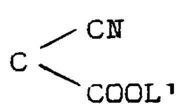

ou $C(COOL^1)_2$,
$L^1$ étant mis chaque fois pour un reste alkyle en $C_1$-$C_8$ qui est éventuellement interrompu par 1 ou 2 atomes d'oxygène, et
X représente CH ou un atome d'azote.